# EUROPÄISCHE PATENTSCHRIFT

(11) **EP 4 575 701 B1**
(45) Veröffentlichungstag und Bekanntmachung des Hinweises auf die Patenterteilung: **12.08.2026**
(21) Anmeldenummer: 24218925.6
(22) Anmeldetag: 11.12.2024
(51) Int. Cl.: G05D 16/04

(54) **REGLER OHNE HILFSENERGIE MIT SIGNALLEITUNGEN**
AUXILIARY POWERLESS REGULATOR WITH SIGNAL LINES
RÉGULATEUR SANS ÉNERGIE AUXILIAIRE AVEC DES LIGNES DE SIGNAUX

(30) Priorität: 22.12.2023 DE 102023136545
(43) Veröffentlichungstag der Anmeldung: 25.06.2025
(73) Patentinhaber: Samson Aktiengesellschaft, 60314 Frankfurt am Main (DE)
(72) Erfinder: Lässler, Rudolf, 63477 Maintal (DE)
(74) Vertreter: noventive Patentanwaltsgesellschaft mbH

(56) Entgegenhaltungen:
- DE-A1- 1 673 598
- US-B2- 11 016 514

## Beschreibung

Die Erfindung betrifft eine Vorrichtung umfassend einen Regler ohne Hilfsenergie mit Signalleitungen.

Heutige Regler werden mittels industrieller Prozesse gefertigt. Für die Effizienz industrieller Prozesse ist es vorteilhaft Gleichteile zu verwenden. Hierdurch wird durch hohe Stückzahlen die Nutzung von Synergieeffekten ermöglicht. Bei Reglern ohne Hilfsenergie werden allerdings häufig die Signalleitungen außen zwischen dem Ventilgehäuse und dem Antrieb nachträglich angepasst und angeschlossen. Diese metallischen Leitungen werden individuell angefertigt. Dieser Prozess ist aufwendig und nicht eindeutig reproduzierbar, welches die spätere Austauschbarkeit erschwert.

Zusätzlich ist es bei der Verwendung von Gleichteilen einfacher, defekte oder verschlissene Teile zu ersetzen, da diese in höherer Stückzahl verfügbar sind. Dies senkt die Wartungs- und Reparaturkosten und verringert mögliche Stillstandszeiten.

Die Verwendung von Gleichteilen erhöht die Wahrscheinlichkeit für die Verfügbarkeit von Ersatzteilen, wenn diese benötigt werden, da die gleichen Teile in mehreren verschiedenen Ventilmodellen verwendet werden. Hierdurch können Regler länger repariert und hierdurch Kosten eingespart werden.

Die Aufgabe besteht darin, einen modularen Regler ohne Hilfsenergie mit möglichst vielen Gleichteilen, wie Ventilstange, Ventilgehäuse und Ventileinsatz zu entwickeln. Dieser Regler kann unterschiedlich konfiguriert werden, wodurch verschiedene Varianten von Druckreglern und Volumenstromreglern ermöglicht werden sollen.

Die DE 10 2016 120 565 A1 offenbart einen Volumenstromregler ohne Hilfsenergie zur Volumenstromregelung, wobei eine Druckkammer über eine Vordruckleitung (Steuerleitung) mit dem Vordruckbereich des Ventilsitzes und die andere Druckkammer über eine Bohrung in der Ventilstange mit einem in dem Ventilsitzbauteil vorhandenen Blendendruckraum verbunden ist.

Die EP 2 848 846 B1 beschreibt einen Druckregler mit einer Antriebsmembran, welche mittels eines Differenzdruckes des Prozessmediums ausgelenkt wird und Öffnungen im Ventilgehäuse vorgesehen sind, welche Prozessdrücke in die Arbeitskammer der Membran lenken.

Die DE 37 41 676 A1 offenbart ein Durchflußregelventil umfassend ein Ventilgehäuse, ein Stellgliedgehäuse, einen zulaufseitigen Raum, einen ablaufseitigem Raum, eine Ventilstange, eine Membran, einen erstem Druckraum, einen zweitem Druckraum und einen Ventilsitz. Bei dem Durchflußregelventil liegt die von Ventilsitz und einem Verschlussstück gebildete Drosselstelle mit einer einstellbaren zweiten Drosselstelle in Reihe. Mit dem Ventilgehäuse ist ein Stellgliedgehäuse verbunden, dass durch eine mit dem Verschlussstück über eine Ventilstange verbundene, bewegliche Trennwand, wie eine Membran, in zwei Druckräume unterteilt ist, die jeweils mit zu Druckmesspunkten vor bzw. hinter der zweiten Drosselstelle führenden Kanälen verbindbar sind, wobei der eine Kanal durch die Ventilstange zu einem internen Messpunkt verläuft.

Die US 11,016,514 B2 betrifft einen Steuerleitungsstabilisator mit einem Gehäuse, das eine Einlass- und Auslasskammer sowie einen Durchgang mit einem ersten und zweiten Sitz umfasst. Eine in dem Durchgang angeordnete Scheibe bewegt sich zwischen einer ersten geschlossenen Position, bei der sie mit dem ersten Sitz in Eingriff steht, einer offenen Position, bei der sie Abstand zu beiden Sitzen hat, und einer zweiten geschlossenen Position, bei der sie mit dem zweiten Sitz in Eingriff steht. Eine erste Feder wirkt von der Auslasskammer und eine zweite von der Einlasskammer auf die Scheibe ein. Die Scheibe reguliert den Fluidstrom durch Bewegung in die geschlossenen Positionen.

Die DE 16 73 598 A1 betrifft Einrichtungen zur Regelung zustandsabhängiger Parameter, beispielsweise zur Temperaturregelung,

Es ist deshalb eine Aufgabe der Erfindung, eine Vorrichtung bereitzustellen, welche den Stand der Technik hinsichtlich einer kompakteren und modulareren Bauform verbessert.

Dies wird erfindungsgemäß durch eine Vorrichtung nach Anspruch 1 erreicht. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Ein Gegenstand der Erfindung ist ein Regler ohne Hilfsenergie, nachfolgend Regler genannt, mit Signalleitungen, umfassend ein Ventilgehäuse und ein Antriebsgehäuse. Das Ventilgehäuse umfasst eine Einlasskammer und eine Auslasskammer, sowie einen in dem Ventilgehäuse angeordneten Ventilsitz, welcher zwischen der Einlasskammer und der Auslasskammer angeordnet ist, sowie ein mit dem Ventilsitz zusammenwirkendes Ventilglied sowie einen Membranantrieb, welcher in dem Antriebsgehäuse angeordnet ist, wobei der Membranantrieb eine Membran, eine erste Arbeitskammer und eine zweite Arbeitskammer umfasst, wobei die erste Arbeitskammer und die zweite Arbeitskammer durch die Membran voneinander getrennt sind. Dabei ist der Membranantrieb über eine Ventilstange mit dem Ventilglied verbunden und dazu ausgebildet, das Ventilglied zu bewegen, um zwischen dem Ventilglied und dem Ventilsitz eine einstellbare Drosselstelle zu bilden. Das Ventilgehäuse umfasst ein Einsatzelement, durch welches die Ventilstange und das Ventilglied entlang einer Längsachse geführt werden, wobei durch die Ventilstange zumindest zwei getrennte Signalleitungen zum Medientransport verlaufen. Der Regler ohne Hilfsenergie mit Signalleitungen kann auch als hilfsenergiefreier Regler mit Signalleitungen bezeichnet werden.

Bei den verschiedenen Konfigurationen des Reglers und beim Einsatz als Druckregler oder Volumenstromregler können die gleichen Grundteile verwendet werden. Diese sind das Ventilgehäuse, das Einsatzelement, der Membranantrieb sowie die Ventilstange mit den beidseitigen Querbohrungen sowie die zwei Leitungen zum Medientransport. Die zwei Leitungen zum Medientransport sind hierbei zwei fluidisch getrennte Signalleitungen. Die Signalleitungen müssen im Betrieb des Reglers nicht in jeder Konfiguration verwendet werden, sind aber jeweils in der Grundausführungen des Bauteils vorgesehen. Gegebenenfalls können Bohrungen einfach mit Stopfen oder Schrauben geschlossen werden, bzw. nicht vorhanden sein. Hierdurch kann der Regler als Volumenregler oder als Druckregler ausgebildet werden. Die verschiedenen Reglertypen können hierzu verschiedene Signalflusswege bzw. diese bildende Bohrbilder zum Medientransport umfassen.

Der Regler umfassend ein Ventilgehäuse und einen Membranantrieb kann mit einem externen Anschluss versehen sein. Das Ventilgehäuse sowie das Einsatzelement können aufgrund von unterschiedlichen Leitungsführungen jeweils mit einer anderen internen Bohrung versehen sein. Das Ventilgehäuse sowie das Einsatzelement können wahlweise unterschiedliche Bohrungen zur Verbindung in die Arbeitskammer eins oder zwei umfassen. Alternativ oder ergänzend in den ersten Hohlraum oder in den zweiten Hohlraum. Alternativ oder ergänzend in die Einlasskammer oder in die Auslasskammer. Bei der Verwendung als Volumenstromregler kann das Ventilglied ebenfalls zusätzliche Bohrungen umfassen.

In einer vorteilhaften Ausgestaltung sind zwischen dem Einsatzelement und der Ventilstange zumindest zwei Gleitdichtungen angeordnet. Die Gleitdichtungen können sich hierzu um die Ventilstange bzw. um die Längsachse erstrecken.

Erfindungsgemäß umfasst die Ventilstange zumindest eine erste Querbohrung, wobei die erste Querbohrung über eine erste Signalleitung, welche durch die Ventilstange verläuft, mit der ersten Arbeitskammer des Membranantriebes verbunden ist.

Eine Bohrung ist eine an der den Außenseiten vollständig umschlossene Vertiefung in einer Oberfläche. Die Vertiefung kann teilweise oder vollständig in bzw. durch die Ventilstange vorgesehen sein. Eine Bohrung unterscheidet sich von einem Durchbruch, welcher beispielweise am Ende einer Ventilstange angeordnet ist, dadurch, dass der Durchbruch keine durchgehende Außenkontur aufweist.

Die Längsachse in Bezug auf die Ventilstange ist die Linie, die vom oberen zum unteren Ende der Ventilstange verläuft. Sie ist die Hauptachse der Ventilstange und bestimmt die Richtung, in der die Stange bewegt wird, um das Ventil zu öffnen oder zu schließen. Die Bewegung entlang dieser Längsachse ermöglicht es der Ventilstange, die Position des Reglers zur Einstellung der Drosselstelle zu steuern und somit den Durchfluss eines Mediums durch das Ventil zu regulieren. Das Medium kann hierbei ein Gas oder eine Flüssigkeit sein.

In einer vorteilhaften Ausgestaltung ist das Ventilglied und die Ventilstange zwischen einer ersten Position und einer zweiten Position zur Einstellung der Drosselstelle entlang der Längsachse verschiebbar.

In der ersten Position kann der Regler vollständig geöffnet sein, was den maximalen Durchfluss eines Mediums oder Prozessfluides durch den Regler ermöglicht. Dies wird oft erreicht, indem die Ventilstange in eine Richtung bewegt wird, um das Ventil zu öffnen.

In der zweiten Position kann der Regler vollständig geschlossen sein, was den Durchfluss des Mediums oder Prozessfluides durch den Regler vollständig stoppen kann. Dies wird erreicht, indem die Ventilstange in die entgegengesetzte Richtung bewegt wird, um den Regler zu schließen. In der zweiten Position kann das Ventilglied mit dem Ventilsitz in Eingriff stehen, so dass die Einlasskammer von der Auslasskammer getrennt ist. Die Ventilstange wird hierzu in positive Y-Richtung bewegt, so dass sich das Ventilglied in Richtung des Ventilsitzes bewegt. Die Y-Richtung wird bei dem erfindungsgemäßen Regler als vertikale Achse bezeichnet.

Der Regler kann auch in Positionen zwischen diesen beiden Extremen betrieben werden, um den Durchfluss des Mediums oder Prozessfluides zu regulieren. Die genaue Position des Reglers in diesem Bereich wird durch den Bedarf an Durchflusssteuerung in der spezifischen Anwendung bestimmt.

In einer weiteren vorteilhaften Ausgestaltung ist zwischen dem Einsatzelement und der Ventilstange ein erster Hohlraum ausgebildet, der sich zumindest teilweise an einer Außenwandung der Ventilstange erstreckt und parallel zur Längsachse verläuft, wobei dieser erste Hohlraum mit der ersten Querbohrung verbunden ist. Der Hohlraum kann durch die zumindest zwei Gleitdichtungen gebildet werden, welche zwischen dem Einsatzelement und der Ventilstange angeordnet sind, wobei die zumindest zwei Gleitdichtungen zueinander beabstandet angeordnet sind.

Die Gleitdichtungen können eine Abdichtung zu der Ventilstange umfassen, sodass kein Fluid der Signalleitungen in andere Bereiche des Reglers gelangen kann.

In einer vorteilhaften Ausgestaltung entspricht eine Länge des ersten Hohlraums parallel zur Längsachse zumindest einer Länge des Abstandes zwischen der ersten Position und der zweiten Position entlang der Längsachse.

Erfindungsgemäß ist zwischen dem Ventilglied und dem Einsatzelement ein zweiter Hohlraum zur Entlastung des Ventilgliedes ausgebildet und eine zweite Querbohrung, welche quer zur Längsachse verläuft mit dem zweiten Hohlraum verbindbar ist.

Ein druckentlastetes Ventilglied kann bei Reglern verbaut werden, um die Betätigungskraft des Ventilgliedes zu reduzieren und eine präzisere Steuerung zu ermöglichen.

In einem Regelventil wird das Ventilglied (z.B. eine Klappe oder ein Kolben) durch den Druck des Mediums, das durch das Ventil fließt, belastet. Dieser Druck kann erheblich sein. Insbesondere in Hochdruckanwendungen kann es schwierig sein, das Ventilglied zu öffnen oder zu schließen.

Das druckentlastete Ventilglied mit dem zweiten Hohlraum ermöglicht es einem Medium, auf beide Seiten des Ventilgliedes zu wirken. Dadurch wird der Druck auf beiden Seiten des Ventilgliedes ausgeglichen, was die Belastung auf das Ventilglied verringert. Diese erleichtert das Öffnen und Schließen des Ventilgliedes und ermöglicht eine genauere Steuerung des Durchflusses.

Zusätzlich kann ein druckentlastetes Ventilglied dazu beitragen, den Verschleiß des Reglers zu reduzieren und seine Lebensdauer zu verlängern. Es kann auch dazu beitragen, das Risiko von Leckagen zu verringern, da der Druck auf das Ventilglied gleichmäßiger verteilt wird.

Erfindungsgemäß umfasst die Ventilstange eine zweite Signalleitung, welche dazu ausgebildet ist, dass der zweite Hohlraum über die zweite Querbohrung, welche mit der zweiten Signalleitung verbunden ist mit der Einlasskammer verbindbar ist.

In einer weiteren vorteilhaften Ausgestaltung ist zwischen dem Einsatzelement und der Membran des Membranantriebes eine Sollwertfeder angeordnet. Die Sollwertfeder kann gegen das Einsatzelement auf einer ersten Seite gelagert sein. Auf einer gegenüberliegenden zweiten Seite kann die Sollwertfeder mit einem Adapterelement gegenüber einer Andruckhülse gelagert sein. Die Andruckhülse kann an der Ventilstange befestigt sein. Die Sollwertfeder dient zur Vorspannung des Membranantriebs auf einen zu regelnden Sollwert. Die Membran des Membranantriebes kann sich dann um diese Position gegen die Sollwertfeder bewegen.

Die Sollwertfeder in einem Regler kann zur initialen Justierung des Durchflusses durch den Regler benutzt werden. Sie ist ein integraler Bestandteil des Stellmechanismus, das den Ventilhub über die Ventilstange steuert.

Die Sollwertfeder kann vorgespannt werden, um einen bestimmten Druck oder Durchfluss (den "Sollwert") einzustellen. Wenn der tatsächliche Druck oder Durchfluss (der "Istwert") vom Sollwert abweicht, führt dies zu einer Bewegung der Ventilstange, welche die Position des Ventilgliedes ändert, um den Durchfluss durch die Drosselstelle zu erhöhen oder zu verringern und so den Sollwert wiederherzustellen.

Die Sollwertfeder ermöglicht es also, den Volumenstrom oder den Druck durch die Drosselstelle präzise zu steuern und auf Veränderungen im System zu reagieren, um eine konstante Leistung zu gewährleisten.

In einer vorteilhaften Ausgestaltung ist die zweite Arbeitskammer über eine Steuerleitung mit einem externen Anschluss verbunden bzw. verbindbar ist. Über den externen Anschluss können der Regler bzw. der Membranantrieb vorgespannt werden. Hierzu kann die zweite Arbeitskammer mit einem externen Medium mit Druck beaufschlagt werden und/oder über den externen Anschluss entlüftet werden.

In einer weiteren vorteilhaften Ausgestaltung ist der der externe Anschluss mit dem ersten Hohlraum verbunden. Über den externen Anschluss kann der Regler vorgespannt werden. Hierzu kann die erste Arbeitskammer mit einem externen Medium bedruckt und/oder über den externen Anschluss entlüftet werden.

Hierzu kann der Regler in einer vorteilhaften Ausgestaltung einen fünften Signalflussweg umfassen, welchen zwischen den Gleitdichtungen mündet. Die Steuerleitung kann mit dem externen Anschluss über die erste Querbohrung sowie die erste Signalleitung innerhalb der Ventilstange mit der ersten Arbeitskammer verbunden werden. Mittels der Steuerleitung kann durch eine externe Druckbeaufschlagung über den externen Anschluss der Sollwert gegenüber der Sollwertfeder justiert werden.

In einer weiteren vorteilhaften Ausgestaltung ist der zweite Hohlraum über eine dritte Signalleitung durch das Einsatzelement mit der zweiten Arbeitskammer verbunden. Der zweite Hohlraum ist über die zweite Querbohrung und der zweiten Signalleitung mit der Auslasskammer verbunden werden bzw. verbindbar ist.

In einer vorteilhaften Ausgestaltung ist die Ventilstange über die zweite Signalleitung mit dem einem Blendenbereich zwischen der Einlasskammer und Auslasskammer verbunden, wobei die Bohrung über die dritte Signalleitung durch das Einsatzelement mit der zweiten Arbeitskammer verbunden ist.

Der Blendenbereich ist eine bei einem Volumenstromregler nach einer Ausführung der Erfindung vorgesehene zweite Drosselstelle. Die Drosselstelle kann durch eine zwischen der Einlasskammer und der Auslasskammer angeordnete Blende gebildet werden. Die Blende kann über eine an der Blende angeordnete Stellschraube in Ihrer Position zwischen der Einlasskammer und der Auslasskammer eingestellt bzw. verändert werden. Durch das Einstellen der Blende über die Stellschraube kann ein Volumenstrom eines Mediums zwischen der Einlasskammer und der Auslasskammer voreingestellt werden. Die Stellschraube ist über eine abnehmbare Kappe am Ventilgehäuse zugänglich.

In einer vorteilhaften Ausgestaltung kann der zweite Hohlraum über eine dritte Signalleitung durch das Einsatzelement mit der zweiten Arbeitskammer verbunden werden. Hierdurch kann der Regler als Volumenstromregler genutzt werden. Der Regler kann hierzu die abnehmbare Kappe umfassen. Die Kappe des Reglers verschließt an der Oberseite eine Öffnung in die Einlasskammer. Die Öffnung kann konzentrisch zur Längsachse eingeordnet werden. Eine Blende eines Blendenbereiches kann in der Öffnung angeordnet sein und kann dazu ausgebildet sein die Ventilstange insbesondere im Bereich der zweiten Signalleitung aufzunehmen und zu führen.

In einer vorteilhaften Ausgestaltung ist der Membranantrieb gegenüber dem Ventilgehäuse verdrehbar angeordnet. Die Steuerleitung des externen Anschlusses kann in einen Ringkanal münden. Der Ringkanal kann zwischen dem Ventilgehäuse und dem Antriebsgehäuse angeordnet sein. Der Ringkanal ist mit einer dritten Bohrung und einer vierten Bohrung, welche im fünften Signalweg angeordnet sind, verbunden. Die dritte Bohrung kann im Antriebsgehäuse angeordnet sein und die vierte Bohrung kann im Ventilgehäuse angeordnet sein. Der externe Anschluss kann somit über die dritte Bohrung mit dem Ringkanal verbunden sein und der erste Hohlraum kann mit der vierten Bohrung mit der Ringkanal verbunden sein. Somit kann über den externen Anschluss, welcher mit der dritten Bohrung verbunden ist, ein Fluid in den Ringkanal eingespeist werden. Vom Ringkanal kann das Fluid über die vierte Bohrung, welche mit einer zweiten Bohrung versehen ist, dem ersten Hohlraum zugeführt werden.

Aufgrund des Ringkanals kann die Lage der dritten Bohrung und der vierten Bohrung zueinander beliebig gewählt werden bzw. die Lage des Antriebsgehäuses zum Ventilgehäuse gewählt werden. Der Membranantrieb bzw. das Antriebsgehäuse sind dazu ausgebildet, dass diese mit dem Ventilgehäuse mittels einer Überwurfmutter in einer beliebigen Winkellage verbindbar sind. Bei einer durchzuführenden Installation in bestehenden Rohrleitungsnetzen können der Ein- bzw. Auslass des Reglers sowie die Signalleitung genau justiert werden. Durch die Ringleitung können die einzelnen Komponenten gegeneinander verdrehbar angeordnet werden.

Nachfolgend werden die verschiedenen Signalflusswege für die Variante des Reglers als Druckregler sowie die Variante des Reglers als Volumenstromregler in einer vorteilhaften Ausgestaltung beschrieben. Zur Realisierung der Funktionalität können die verschiedenen Reglertypen verschiedene Bohrbilder umfassen.

Der Regler in der Ausgestaltung als Druckregler kann einen ersten Signalflussweg umfassen. Der erste Signalflussweg kann durch die zweite Signalleitung des Reglers über die zweite Querbohrung in den zweiten Hohlraum des Reglers zur Entlastung des Ventilgliedes des Reglers gegenüber einem Einlassdruck in der Einlasskammer verlaufen.

Ein zweiter Signalflussweg kann über die Einlasskammer durch die Drosselstelle über die Auslasskammer zu einer ersten Bohrung über die zweite Bohrung in den ersten Hohlraum verlaufen und von dort in die erste Arbeitskammer verlaufen. Die erste Bohrung kann von der Auslasskammer des Ventilgehäuses in Richtung des Einsatzelementes angeordnet sein und sich bis zu diesem erstrecken. Die erste Bohrung kann in eine zweite Bohrung im Einsatzelement münden, wobei sich die zweite Bohrung im Einsatzelement in Richtung der Ventilstange bzw. bis zu der Ventilstange erstrecken kann. Die zweite Bohrung kann hierbei aus dem Einsatzelement in den ersten Hohlraum münden. Von dem ersten Hohlraum kann der zweite Signalflussweg über die erste Querbohrung der Ventilstange und die erste Signalleitung, welche mit der ersten Querbohrung verbunden ist in die erste Arbeitskammer verlaufen. Die erste Signalleitung und/oder die zweite Signalleitung kann in der Ventilstange angeordnet sein und kann vorzugsweise parallel oder identisch zur Längsachse verlaufen. Ein dritter Signalflussweg des Reglers kann über den externen Steueranschluss verlaufen. Hierüber kann ein Medium zu oder abgeführt werden. Der externe Anschluss kann hierzu mit der Steuerleitung verbunden sein, welche mit der zweiten Arbeitskammer verbunden sein kann.

Der Regler in der Ausgestaltung als Volumenstromregler kann einen vierten Signalflussweg umfassen. Die Signalflusswege 1 - 3 können in dieser Ausgestaltung vernachlässigt werden bzw. geschlossen sein. Entsprechende Bohrungen können trotzdem vorgesehen aber verschlossen sein, um eine möglichst hohe Verwendung von Gleichteilen zu ermöglichen. Der vierte Signalflussweg kann über die Einlasskammer durch die Drosselstelle verlaufen. Die Drosselstelle kann über die Blende des Blendebereiches zusätzlich verengt sein. Die zweite Signalleitung kann in der Ausgestaltung als Volumenstromregler im Blendenbereich bzw. in der Blende münden. Der vierte Signalflussweg kann über den Blendenbereich in die zweite Signalleitung, welche in der Ventilstange verläuft, bis zur zweiten Querbohrung geführt werden. Die zweite Querbohrung kann mit der dritten Signalleitung verbunden sein, welche in der zweiten Arbeitskammer mündet. Die dritte Signalleitung kann hierzu im Einsatzelement angeordnet sein. Die dritte Signalleitung im Einsatzelement kann vorzugsweise parallel zu Längsachse im Einsatzelement verlaufen. Ein fünfter Signalflußweg kann über einen externen Anschluss eingespeist werden. Der externe Anschluss kann mit der Signalleitung verbunden sein. Die Signalleitung kann in einer dritten Bohrung münden. Die Dritte Bohrung mündet in dem Ringkanal. Der Ringkanal kann mit einer vierten Bohrung verbunden sein. Die vierte Bohrung kann mit einer zweiten Bohrung verbunden sein, welche im ersten Hohlraum mündet. Von dem ersten Hohlraum kann der fünfte Signalflussweg über die erste Querbohrung und die erste Signalleitung in die erste Arbeitskammer fließen.

Im Folgenden werden Ausführungsformen, Weiterbildungen und Beispiele der Erfindung anhand der beigefügten Zeichnungen näher erläutert. Die Figuren zeigen:
- Figur 1:: einen Regler als Druckregler in Schnittdarstellung; sowie
- Figur 2:: einen Regler als Volumenregler in Schnittdarstellung; sowie
- Figur 3:: einen Regler als Druckregler in Schnittdarstellung mit Signalflüssen; sowie
- Figur 4: einen Regler als Volumenregler in Schnittdarstellung mit Signalflüssen.

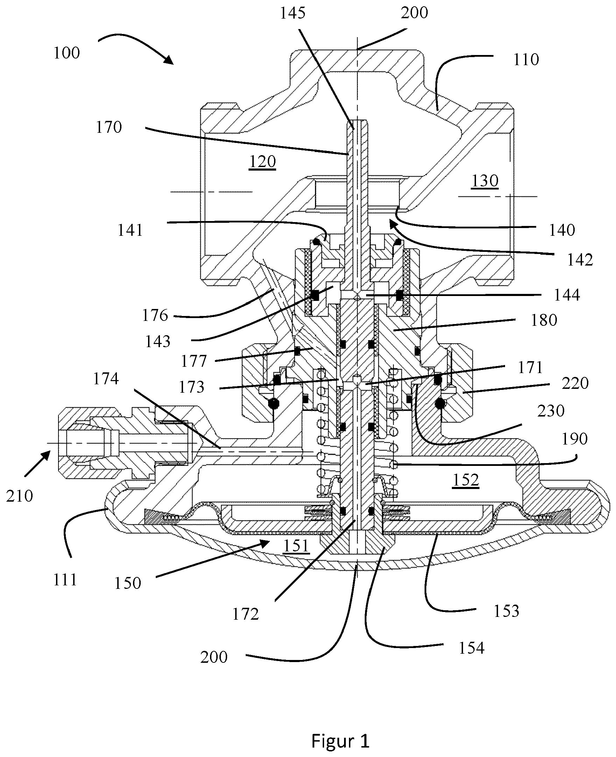

**Figur 1** zeigt einen Regler 100 ohne Hilfsenergie 100 mit Signalleitungen 145, 172 in Schnittdarstellung. Der Regler 100 ist als Druckregler ausgebildet. Der Regler 100 umfasst ein Ventilgehäuse 110 und ein Antriebsgehäuse 111. Das Antriebsgehäuse 110 und das Ventilgehäuse 111 sind über eine Überwurfmutter 220 verbunden, wobei das Ventilgehäuse 110 eine Einlasskammer 120 und eine Auslasskammer 130 umfasst. Das Ventilgehäuse 110 umfasst weiter einen in dem Ventilgehäuse 110 angeordneten Ventilsitz 140, welcher zwischen der Einlasskammer 120 und der Auslasskammer 130 angeordnet ist. Es umfasst weiter einen mit dem Ventilsitz 140 zusammenwirkenden Ventilglied 141. Sowie einen Membranantrieb 150, welcher in dem Antriebsgehäuse 111 angeordnet ist, der Membranantrieb 150 umfasst eine Membran 153, eine erste Arbeitskammer 151 und eine zweite Arbeitskammer 152, wobei die erste Arbeitskammer 151 und die zweite Arbeitskammer 152 durch die Membran 153 voneinander getrennt sind. Wobei der Membranantrieb 150 über eine Ventilstange 170 mit dem Ventilglied 141 verbunden und dazu ausgebildet ist, um das Ventilglied 141 zu bewegen, um zwischen dem Ventilglied 141 und dem Ventilsitz 140 eine einstellbare Drosselstelle 142 zu bilden. Das Ventilgehäuse 110 umfasst ein Einsatzelement 180, durch welches die Ventilstange 170 und das Ventilglied 141 entlang einer Längsachse 200 geführt werden, wobei durch die Ventilstange 170 zumindest zwei getrennte Signalleitungen 145, 172 zum Medientransport verlaufen.

Die Ventilstange 170 umfasst eine erste Querbohrung 171, wobei die erste Querbohrung über eine erste Signalleitung 172 welche durch die Ventilstange 170 verläuft und mit der ersten Arbeitskammer 151 des Membranantriebes 150 verbunden ist.

Zwischen dem Einsatzelement 180 und der Ventilstange 170 ist ein erster Hohlraum 173 ausgebildet, der sich zumindest teilweise an einer Außenwandung der Ventilstange 170 und dem Einsatzelement 180 erstreckt und parallel zur Längsachse 200 verläuft, wobei dieser erste Hohlraum 173 mit der ersten Querbohrung 171 verbunden ist. Der Regler 100 umfasst eine im inneren verlaufende Signalleitung zum Beaufschlagen des Membranantriebes 150. Die Signalleitung verbindet die Auslasskammer des Stellventils mit der ersten Arbeitskammer 151 des Membranantriebes 150. Im Ventilgehäuse 110 der Auslasskammer 130 befindet sich eine erste Bohrung 176 in Richtung des Einsatzelementes 180. Im Einsatzelement 180 befindet sich eine mit der ersten Bohrung 176 in Verbindung stehende zweite Bohrung 177.

Die im Ventilgehäuse 110, im Einsatzelement 180, und in der Ventilstange befinden sich miteinander verbundene Bohrungen 176, 177 sowie der erste Hohlraum 173 und die erste Querbohrung 171, welche eine Leitung zur Signalführung bilden. Die erste Signalleitung 172 in der Ventilstange stellt die Verbindung mit der ersten Arbeitskammer 151 her. Auf diese Weise wird das Prozessmedium von der Auslasskammer 130 zur ersten Arbeitskammer 151 geleitet. Die hiermit betätigte Ventilstange 170 verändert die Lage des Ventilgliedes 141 und somit einen Prozessmediumsdruck in der Auslasskammer 130.

Der erste Hohlraum 173 hat eine Länge parallel zur Längsachse 200. Die Länge entspricht zumindest einer Länge des Abstandes zwischen einer ersten Position und einer zweiten Position entlang der Längsachse 170 des Ventilgliedes 141.

Das Ventilglied 141 und die Ventilstange 170 sind variabel zwischen der ersten Position und der zweiten Position zur Einstellung der Drosselstelle 142 entlang der Längsachse 200 verschiebbar.

In der ersten Position ist der Regler 100 vollständig geöffnet, was den maximalen Durchfluss eines Mediums oder Prozessfluides durch den Regler 100 ermöglicht. Dies wird erreicht, indem die Ventilstange 170 in eine Richtung bewegt wird, um das Ventil zu öffnen.

In der zweiten Position ist der Regler 100 vollständig geschlossen, was den Durchfluss des Mediums oder Prozessfluides durch den Regler 100 vollständig stoppt. Dies wird erreicht, indem die Ventilstange 170 in die entgegengesetzte Richtung bewegt wird, um den Regler 100 zu schließen. In der zweiten Position steht das Ventilglied 140 mit dem Ventilsitz 140 in Eingriff, so dass die Einlasskammer 120 von der Auslasskammer 130 getrennt ist.

Der Regler 100 kann auch in Positionen zwischen diesen beiden Extremen betrieben werden, um den Durchfluss des Mediums oder Prozessfluides zu regulieren. Die genaue Position Reglers 100 in diesem Bereich wird durch den Bedarf an Durchflusssteuerung in der spezifischen Anwendung bestimmt.

Zwischen dem Ventilglied 141 und dem Einsatzelement 180 ist ein zweiter Hohlraum 143 zur Entlastung des Ventilgliedes 141 ausgebildet und eine zweite Querbohrung 144, welche Quer zu Längsachse 200 verläuft und mit dem zweiten Hohlraum 143 verbunden ist.

Der zweite Hohlraum 143 ist über die zweite Querbohrung 144 und über eine zweite Signalleitung 145, welche durch die Ventilstange 170 verläuft mit der Einlasskammer 120 verbunden.

Zwischen dem Einsatzelement 180 und der Membran des Membranantriebes 150 ist eine Sollwertfeder 190 angeordnet.

Die Sollwertfeder 190 ist gegen das Einsatzelement 180 auf einer ersten Seite gelagert. Auf einer gegenüberliegenden zweiten Seite ist die Sollwertfeder 190 mit einem Federteller und einem Sicherungsring an der Ventilstange 170 befestigt. Die Ventilstange 170 ist über eine Steckverbindung mit der Andruckhülse 154 verbunden bzw. in die Andruckhülse 154 eingesteckt. Die Sollwertfeder 190 dient zum Vorspannen des Membranantriebs 150 auf einen zu regelnden Sollwert.

Die zweite Arbeitskammer 152 ist über eine Steuerleitung 174 mit einem externen Anschluss 210 verbunden. Durch den externen Anschluss 210 kann die zweite Arbeitskammer 152 mit Druck beaufschlagt werden oder entlüftet werden. Mittels dieser Steuerleitung 174 kann mittels äußerer Druckbeaufschlagung der Sollwert über den externen Anschluss 210 gegenüber der Sollwertfeder 190 justiert werden.

Die wirksame Membranfläche der Membran 153 wird von dem Einlassdruck in der Auslasskammer 130 beaufschlagt und wirkt gegen die Sollwertfeder 190. Es stellt sich ein Kräftegleichgewicht zwischen der Sollwertfeder 190 und dem Signaldruck über den externen Anschluss 210 ein, indem sich die Sollwertfeder 190 mehr oder weniger vorspannt und damit das Ventilglied 141 in unterschiedliche Positionen bewegt. Hiermit wird ein gleichmäßiger Ausgangsdruck in der Auslasskammer 130 eingestellt.

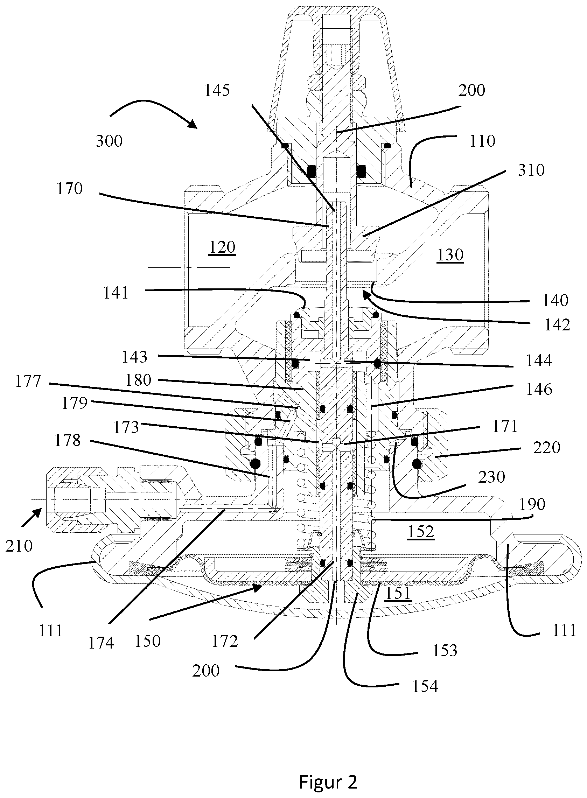

Figur 2 zeigt einen Regler ohne Hilfsenergie 300 mit Signalleitungen. Der Regler 300 ist als Volumenstromregler ausgebildet in Schnittdarstellung. Der Regler 300 umfasst ein Ventilgehäuse 110 sowie ein Antriebsgehäuse 111, wobei das Ventilgehäuse 110 eine Einlasskammer 120 und eine Auslasskammer 130 umfasst. Das Ventilgehäuse 110 umfasst weiter einen in dem Ventilgehäuse 110 angeordneten Ventilsitz 140, welcher zwischen der Einlasskammer 120 und der Auslasskammer 130 angeordnet ist. Sowie einen mit dem Ventilsitz 140 zusammenwirkenden Ventilglied 141. Sowie einen Membranantrieb 150, welcher in dem Antriebsgehäuse 111 angeordnet ist. Der Membranantrieb 150 umfasst eine Membran 153, eine erste Arbeitskammer 151 und eine zweite Arbeitskammer 152, wobei die erste Arbeitskammer 151 und die zweite Arbeitskammer 152 durch die Membran 153 voneinander getrennt sind. Wobei der Membranantrieb 150 über eine Ventilstange 170 mit dem Ventilglied 141 verbunden und dazu ausgebildet ist, das Ventilglied 141 zu bewegen, um zwischen dem Ventilglied 141 und dem Ventilsitz 140 eine einstellbare Drosselstelle 142 zu bilden. Das Antriebsgehäuse 111 umfasst ein Einsatzelement 180, durch welches die Ventilstange 170 und das Ventilglied 141 entlang einer Längsachse 200 geführt werden, wobei durch die Ventilstange 170 zumindest zwei getrennte Signalleitungen 145, 172 zum Medientransport verlaufen.

Die Ventilstange umfasst 170 eine erste Querbohrung 171, wobei die erste Querbohrung über eine erste Signalleitung 172 welche durch die Ventilstange 170 verläuft und mit der ersten Arbeitskammer 151 des Membranantriebes 150 verbunden ist.

Zwischen dem Einsatzelement 180 und der Ventilstange 170 ist ein erster Hohlraum 173 ausgebildet, der sich zumindest teilweise an einer Außenwandung der Ventilstange 170 und dem Einsatzelement 180 erstreckt und parallel zur Längsachse 200 verläuft, wobei dieser erste Hohlraum 173 mit der ersten Querbohrung 171 verbunden ist und in die erste Arbeitskammer 151 mündet.

Die Signalleitung zur Sollwerteinstellung beginnt bei einem externen Anschluss 210 und umfasst eine Steuerleitung 174 sowie eine damit verbundene dritte Bohrung 178 im Antriebsgehäuse 111. Das Einsatzelement 180 umfasst eine vierte Bohrungen 179 und eine damit verbundene fünfte Bohrung 181, wobei die dritte Bohrung 178 mit der vierten Bohrung 179 verbunden ist. Die fünfte Bohrung 181 mündet im ersten Hohlraum 173 welcher durch zwei Gleitdichtungen begrenzt wird. Der erste Hohlraum 173 ist über die erste Querbohrung 171 in der Ventilstange 170 mit der ersten Signalleitung 172 verbunden. Die erste Signalleitung mündet in der ersten Arbeitskammer 151. Mittels dieser Signalleitung kann z.B. mittels äußerer Druckbeaufschlagung über den externen Anschluss 210 der Sollwert gegenüber der Sollwertfeder 190 justiert werden. Die Gleitdichtungen sind zusätzlich zu der Ventilstange 170 abgedichtet, sodass kein Fluid in andere Bereiche des Reglers 300 gelangen kann.

Der erste Hohlraum 173 hat eine Länge parallel zur Längsachse 200. Die Länge entspricht zumindest einer Länge des Abstandes zwischen einer ersten Position und einer zweiten Position entlang der Längsachse 170 entspricht.

Das Ventilglied 141 und die Ventilstange 170 sind variabel zwischen der ersten Position und der zweiten Position zur Einstellung der Drosselstelle 142 entlang der Längsachse 200 verschiebbar.

In der ersten Position ist der Regler 300 vollständig geöffnet, was den maximalen Durchfluss eines Mediums oder Prozessfluides durch den Regler 300 ermöglicht. Dies wird oft erreicht, indem die Ventilstange 170 in eine Richtung bewegt wird, um das Ventil zu öffnen.

In der zweiten Position ist der Regler 300 vollständig geschlossen, was den Durchfluss des Mediums oder Prozessfluides durch den Regler 300 vollständig stoppt. Dies wird erreicht, indem die Ventilstange 170 in die entgegengesetzte Richtung bewegt wird, um den Regler 300 zu schließen. In der zweiten Position steht das Ventilglied 140 mit dem Ventilsitz 140 in Eingriff, so dass die Einlasskammer 120 von der Auslasskammer 130 getrennt ist.

Der Regler 300 kann auch in Positionen zwischen diesen beiden Extremen betrieben werden, um den Durchfluss des Mediums oder Prozessfluides zu regulieren. Die genaue Position Reglers 300 in diesem Bereich wird durch den Bedarf an Durchflusssteuerung in der spezifischen Anwendung bestimmt.

Zwischen dem Ventilglied 141 und dem Einsatzelement 180 ist ein zweiter Hohlraum 143 zur Entlastung des Ventilgliedes 141 ausgebildet und eine zweite Querbohrung 144, welche Quer zu Längsachse 200 verläuft und mit dem zweiten Hohlraum 143 verbunden ist.

Der externe Anschluss 210 ist mit dem ersten Hohlraum 173 verbunden.

Der zweite Hohlraum 143 ist über eine dritte Signalleitung 146 durch das Einsatzelement 180 mit der zweiten Arbeitskammer 152 verbunden. Die Ventilstange 170 mit der Signalleitung 145 ist ebenfalls mit dem zweiten Hohlraum 143 verbunden, sodass eine Verbindung von einer Blende 310 im Blendenbereich zwischen der Einlasskammer 120 und dem Auslasskammer 130 und der zweiten Arbeitskammer 152 besteht.

Der Blendenbereich ist eine bei dem Regler 300 vorgesehene zweite Drosselstelle. Die Drosselstelle kann durch eine zwischen der Einlasskammer 120 und der Auslasskammer 130 angeordnete Blende 310 gebildet werden. Die Blende 310 kann über eine an der Blende 310 angeordnete Stellschraube in Ihrer Position zwischen der Einlasskammer 120 und der Auslasskammer 130 eingestellt bzw. verändert werden. Durch das Einstellen der Blende 310 über die Stellschraube kann ein Volumenstrom eines Mediums zwischen der Einlasskammer 120 und der Auslasskammer 130 voreingestellt werden. Die Stellschraube ist über eine abnehmbare Kappe am Ventilgehäuse 110 zugänglich.

Der zweite Hohlraum 143 ist über die zweite Querbohrung 144 und über eine zweite Signalleitung 145, welche durch die Ventilstange 170 verläuft, mit der Blende 310 verbunden.

Zwischen dem Einsatzelement 180 und der Membran des Membranantriebes 150 ist eine Sollwertfeder 190 angeordnet.

Die Sollwertfeder 190 ist gegen das Einsatzelement 180 auf einer ersten Seite gelagert. Auf einer gegenüberliegenden zweiten Seite ist die Sollwertfeder 190 mit einem Adapterelement gegenüber einer Andruckhülse 154 gelagert. Die Andruckhülse 154 ist an der Ventilstange 170 befestigt. Die Sollwertfeder 190 dient zur Vorspannung des Membranantriebs 150 auf einen zu regelnden Sollwert. Die wirksame Membranfläche der Membran 153 wird von dem Blendendruck zwischen der Einlasskammer 120 und der Auslasskammer 130 beaufschlagt und wirkt gegen die Sollwertfeder 190. Es stellt sich ein Kräftegleichgewicht zwischen der Sollwertfeder 190 und dem Signaldruck ein, indem sich die Sollwertfeder mehr oder weniger vorspannt und damit das Ventilglied 141 in unterschiedliche Positionen bewegt. Hiermit wird ein gleichmäßiger Volumenstrom in der Auslasskammer 130 eingestellt.

Bei dem Regler 300 bezieht sich die wirksame Membranfläche auf den Bereich der Membran 153, der tatsächlich zur Druckregelung genutzt wird. Die Membran 153 ist ein wesentlicher Bestandteil des Reglers und reagiert auf Druckänderungen im System.

Die Membran wird typischerweise den Systemdruck in der ersten Arbeitskammer auf der einen Seite und einen Referenz- oder Steuerdruck welcher über den externen Anschluss 210 zugeführt werden kann auf der anderen Seite belastet. Die Größe der wirksamen Membranfläche kann die Empfindlichkeit und das Ansprechverhalten des Reglers 300 beeinflussen.

In einer vorteilhaften Ausgestaltung ist der Membranantrieb 150 gegenüber dem Ventilgehäuse 110 verdrehbar angeordnet. Die Steuerleitung 174 des externen Anschlusses 210 mündet in einen Ringkanal 230. Der Ringkanal 230 ist mit der dritten Bohrung 178 und der vierten Bohrung 179 verbunden. Aufgrund des Ringkanals 230 kann die Lage dritten Bohrung 178 und der vierten Bohrung 179 zueinander beliebig sein. Der Membranantrieb 150 bzw. das Antriebsgehäuse 111 des Membranantriebes 150 sind dazu ausgebildet, dass diese mit dem Ventilgehäuse 110 mittels einer Überwurfmutter 220 in einer beliebigen Winkellage verbindbar sind. Bei einer durchzuführenden Installation in bestehenden Rohrleitungsnetzen können die verschiedenen Anschlüsse des Reglers 300 gegeneinander verdreht werden.

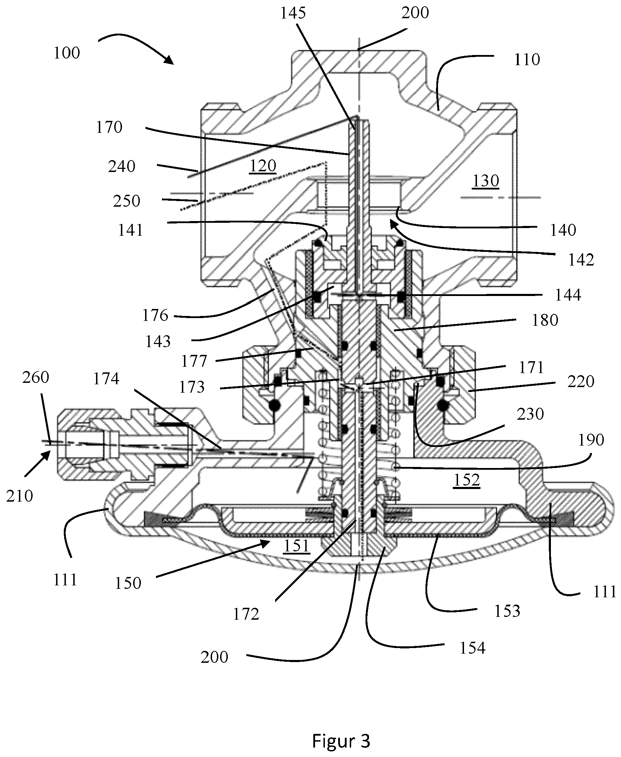

Figur 3 zeigt alle Merkmale der Figur 1 sowie zusätzlich die durch den Regler 100, welcher als Druckregler ausgebildet ist, geführten Signalflusswege 240, 250, 260 eines Mediums. Ein erster Signalflussweg 240 verläuft durch die zweite Signalleitung 145 in den zweiten Hohlraum 143 zur Entlastung eines Ventilgliedes 141 gegenüber einem Einlassdruck in einer Einlasskammer 120. Ein zweiter Signalflussweg 250 fließt über die Einlasskammer 120 durch die Drosselstelle 142 zwischen der Einlasskammer 120 und der Auslasskammer 130 über die Auslasskammer 130 zu einer ersten Bohrung 176 über eine zweite Bohrung 177 in den ersten Hohlraum 173. Von dem ersten Hohlraum 173 fließt der zweite Signalflussweg 250 über die erste Querbohrung 171 und die erste Signalleitung 172 in die erste Arbeitskammer 151. Ein dritter Signalflussweg 260 verläuft über den externen Steueranschluss 210. Hierüber kann ein Medium zugeführt oder ausgeleitet werden, um einen Sollwert des Reglers einzustellen. Der externe Anschluss ist hierzu mit der Steuerleitung 174 verbunden, welche mit der zweiten Arbeitskammer 152 verbunden ist.

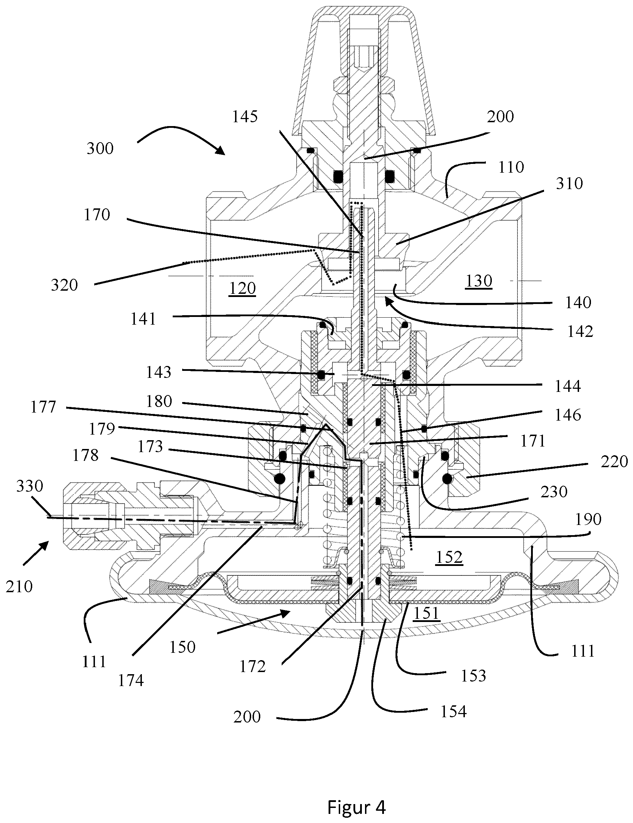

Figur 4 zeigt alle Merkmale der Figur 2 sowie zusätzlich die durch den Regler 300 welcher als Volumenstromregler ausgebildet ist verlaufende Signalflusswege 320, 330 eines Mediums. Ein vierter Signalflussweg 320 verläuft über eine Einlasskammer 120 sowie über eine Drosselstelle 142, welche durch eine Blende 310 verengt ist, in die zweite Signalleitung 145 in der Ventilstange 170 bis zu einer zweiten Querbohrung 144. Die zweite Querbohrung ist mit einer dritten Signalleitung 146 verbunden, welche in der zweiten Arbeitskammer 152 mündet. Ein fünfter Signalflussweg 330 wird über einen externen Anschluss 210 eingespeist. Der externe Anschluss 210 ist mit einer Signalleitung 174 verbunden. Die Signalleitung 174 mündet in einer dritten Bohrung 178. Die Dritte Bohrung 178 mündet einen Ringkanal 230. Der Ringkanal 230 ist ebenfalls mit einer vierten Bohrung 179 verbunden. Die vierte Bohrung 174 ist mit einer zweiten Bohrung 176 verbunden, welche im ersten Hohlraum 173 mündet. Von dem ersten Hohlraum 173 verläuft der fünfte Signalflussweg 330 über die erste Querbohrung 171 und die erste Signalleitung 172 in die erste Arbeitskammer 151.

**BEZUGSZEICHENLISTE**

| | |
|---|---|
| Regler | 100 |
| Ventilgehäuse | 110 |
| Antriebsgehäuse | 111 |
| Einlasskammer | 120 |
| Auslasskammer | 130 |
| Ventilsitz | 140 |
| Ventilglied | 141 |
| Drosselstelle | 142 |
| Zweiter Hohlraum | 143 |
| Zweite Querbohrung | 144 |
| Zweite Signalleitung | 145 |
| Dritte Signalleitung | 146 |
| Membranantrieb | 150 |
| Erste Arbeitskammer | 151 |
| Zweite Arbeitskammer | 152 |
| Membran | 153 |
| Andruckhülse | 154 |
| Ventilstange | 170 |
| Erste Querbohrung | 171 |
| Erste Signalleitung | 172 |
| Erster Hohlraum | 173 |
| Steuerleitung | 174 |
| Erste Bohrung | 176 |
| Zweite Bohrung | 177 |
| Dritte Bohrung | 178 |
| Vierte Bohrung | 179 |
| Einsatzelement | 180 |
| Fünfte Bohrung | 181 |
| Sollwertfeder | 190 |
| Längsachse | 200 |
| Externer Anschluss | 210 |
| Überwurfmutter | 220 |
| Ringkanal | 230 |
| Erster Signalflussweg | 240 |
| Zweiter Signalflussweg | 250 |
| Dritter Signalflussweg | 260 |
| Regler | 300 |
| Blende | 310 |
| Vierter Signalflussweg | 320 |
| Fünfter Signalflussweg | 330 |

## Patentansprüche

1. Regler ohne Hilfsenergie (100) mit Signalleitungen, **umfassend**
ein Ventilgehäuse (110) und ein Antriebsgehäuse (111),
wobei das Ventilgehäuse (110) eine Einlasskammer (120) und eine Auslasskammer (130) umfasst, sowie
einen in dem Ventilgehäuse (110) angeordneten Ventilsitz (140), welcher zwischen der Einlasskammer (120) und der Auslasskammer (130) angeordnet ist, sowie ein mit dem Ventilsitz (140) zusammenwirkendes Ventilglied (141) sowie einen Membranantrieb (150), welcher in dem Antriebsgehäuse (111) angeordnet ist, wobei der Membranantrieb (150) eine Membran (153), eine erste Arbeitskammer (151) und eine zweite Arbeitskammer (152) umfasst, wobei die erste Arbeitskammer (151) und die zweite Arbeitskammer (152) durch die Membran (153) voneinander getrennt sind, wobei der Membranantrieb (150) über eine Ventilstange (170) mit dem Ventilglied (141) verbunden und dazu ausgebildet ist, das Ventilglied (141) zu bewegen, um zwischen dem Ventilglied (141) und dem Ventilsitz (140) eine einstellbare Drosselstelle (142) zu bilden, wobei
das Ventilgehäuse (110) ein Einsatzelement (180) umfasst, durch welches die Ventilstange (170) und das Ventilglied (141) entlang einer Längsachse (200) geführt werden,
**dadurch gekennzeichnet, dass**
durch die Ventilstange (170) zumindest zwei getrennte Signalleitungen (145, 172) zum Medientransport verlaufen,
wobei die Ventilstange (170) eine erste Querbohrung (171) umfasst, wobei die erste Querbohrung (171) über eine erste Signalleitung (172), welche durch die Ventilstange (170) verläuft, mit der ersten Arbeitskammer (151) des Membranantriebes (150) verbunden ist und
zwischen dem Ventilglied (141) und dem Einsatzelement (180) ein zweiter Hohlraum (143) zur Entlastung des Ventilgliedes (141) ausgebildet ist und die Ventilstange (170) eine zweite Querbohrung (144) umfasst, welche quer zur Längsachse (200) verläuft und mit dem zweiten Hohlraum (143) verbindbar ist, und
die Ventilstange (170) eine zweite Signalleitung (145) umfasst, welche dazu ausgebildet ist, dass der zweite Hohlraum (143) über die zweite Querbohrung (144), welche mit der zweiten Signalleitung (145) verbunden ist, mit der Einlasskammer (120) verbindbar ist.

2. Regler ohne Hilfsenergie (100) nach dem vorhergehenden Anspruch, **dadurch gekennzeichnet, dass**
zwischen dem Einsatzelement (180) und der Ventilstange (170) ein erster Hohlraum (173) ausgebildet ist, der sich zumindest teilweise an einer Außenwandung der Ventilstange (170) und dem Einsatzelement (180) erstreckt und parallel zur Längsachse (200) verläuft, wobei dieser erste Hohlraum (173) mit der ersten Querbohrung (171) verbunden ist.

3. Regler ohne Hilfsenergie (100) nach Anspruch 2, **dadurch gekennzeichnet, dass**
eine Länge des ersten Hohlraums (173) parallel zur Längsachse (200) zumindest einer Länge des Abstandes zwischen einer ersten Position und einer zweiten Position entlang der Längsachse (170) entspricht.

4. Regler ohne Hilfsenergie (100) nach einem der vorhergehenden Ansprüche,
**dadurch gekennzeichnet, dass**
zwischen dem Einsatzelement (180) und der Membran des Membranantriebes (150) eine Sollwertfeder (190) angeordnet ist.

5. Regler ohne Hilfsenergie (100) nach einem der vorhergehenden Ansprüche,
**dadurch gekennzeichnet, dass**
dass die zweite Arbeitskammer (152) über eine Steuerleitung (174) mit einem externen Anschluss (210) verbunden ist.

6. Regler ohne Hilfsenergie (100) nach einem der vorhergehenden Ansprüche 2 bis 5, **dadurch gekennzeichnet, dass**
der externe Anschluss (210) mit dem ersten Hohlraum (173) verbunden ist.

7. Regler ohne Hilfsenergie (100) nach einem der vorhergehenden Ansprüche
**dadurch gekennzeichnet, dass**
der zweite Hohlraum (143) über eine dritte Signalleitung (146) durch das Einsatzelement (180) mit der zweiten Arbeitskammer (152) verbunden ist.

8. Regler ohne Hilfsenergie (100) nach Anspruch 7, **dadurch gekennzeichnet, dass**
die Ventilstange (170) über die zweite Signalleitung (145) mit einem Blendenbereich zwischen der Einlasskammer (120) und der Auslasskammer (130) verbunden ist, wobei die Bohrung über die dritte Signalleitung (146) durch das Einsatzelement (180) mit der zweiten Arbeitskammer (152) verbunden ist.

9. Regler ohne Hilfsenergie (100) nach einem der vorhergehenden Ansprüche,
**dadurch gekennzeichnet, dass**
das Ventilglied (141) und die Ventilstange (170) zwischen einer ersten Position und einer zweiten Position zur Einstellung der Drosselstelle (143) entlang der Längsachse verschiebbar sind.

10. Regler ohne Hilfsenergie (100) nach einem der vorhergehenden Ansprüche, **dadurch gekennzeichnet, dass**
das Antriebsgehäuse (111) gegenüber dem Ventilgehäuse (110) verdrehbar angeordnet ist.

11. Regler ohne Hilfsenergie (100) nach Anspruch 10, **dadurch gekennzeichnet, dass** zwischen dem Antriebsgehäuse (111) und dem Ventilgehäuse (110) ein Ringkanal (230) angeordnet ist.

12. Regler ohne Hilfsenergie (100) nach Anspruch 10 oder Anspruch 11, **dadurch gekennzeichnet, dass**
der externe Anschluss (210) mit dem Ringkanal (230) verbunden ist und der erste Hohlraum (173) mit dem Ringkanal (230) verbunden ist.

## Claims

1. Self-operated controller (100) having signal lines, **comprising**
a valve housing (110) and an actuator housing (111),
wherein the valve housing (110) comprises an inlet chamber (120) and an outlet chamber (130), and
a valve seat (140) arranged in the valve housing (110), which valve seat is arranged between the inlet chamber (120) and the outlet chamber (130), and a valve member (141) interacting with the valve seat (140), and a diaphragm actuator (150) which is arranged in the actuator housing (111), wherein the diaphragm actuator (150) comprises a diaphragm (153), a first working chamber (151), and a second working chamber (152), wherein the first working chamber (151) and the second working chamber (152) are separated from one another by the diaphragm (153), wherein the diaphragm actuator (150) is connected to the valve member (141) via a valve rod (170) and is designed to move the valve member (141) in order to form an adjustable throttle point (142) between the valve member (141) and the valve seat (140), wherein
the valve housing (110) comprises an insert element (180) through which the valve rod (170) and the valve member (141) are guided along a longitudinal axis (200),
**characterized in that**
at least two separate signal lines (145, 172) for media transport run through the valve rod (170),
wherein
the valve rod (170) comprises a first transverse bore (171), wherein the first transverse bore (171) is connected to the first working chamber (151) of the diaphragm actuator (150) via a first signal line (172) which runs through the valve rod (170) and
a second cavity (143) is formed between the valve member (141) and the insert element (180) to relieve the valve member (141), and the valve rod (170) comprises a second transverse bore (144) which runs transversely to the longitudinal axis (200) and can be connected to the second cavity (143), and
the valve rod (170) comprises a second signal line (145) which is designed so that the second cavity (143) can be connected to the inlet chamber (120) via the second transverse bore (144) which is connected to the second signal line (145).

2. Self-operated controller (100) according to the preceding claim, **characterized in that**
a first cavity (173) is formed between the insert element (180) and the valve rod (170), which first cavity extends at least partially on an outer wall of the valve rod (170) and the insert element (180) and runs parallel to the longitudinal axis (200), wherein this first cavity (173) is connected to the first transverse bore (171).

3. Self-operated controller (100) according to claim 2, **characterized in that**
a length of the first cavity (173) parallel to the longitudinal axis (200) corresponds at least to a length of the distance between a first position and a second position along the longitudinal axis (170).

4. Self-operated controller (100) according to any of the preceding claims;
**characterized in that**
a setpoint spring (190) is arranged between the insert element (180) and the diaphragm of the diaphragm actuator (150).

5. Self-operated controller (100) according to any of the preceding claims;
**characterized in that**
the second working chamber (152) is connected to an external connection (210) via a control line (174).

6. Self-operated controller (100) according to any of the preceding claims 2 to 5, **characterized in that**
the external connection (210) is connected to the first cavity (173).

7. Self-operated controller (100) according to any of the preceding claims;
**characterized in that**
the second cavity (143) is connected to the second working chamber (152) via a third signal line (146) through the insert element (180).

8. Self-operated controller (100) according to claim 7, **characterized in that**
the valve rod (170) is connected via the second signal line (145) to an orifice plate region between the inlet chamber (120) and the outlet chamber (130), wherein the bore is connected to the second working chamber (152) via the third signal line (146) through the insert element (180).

9. Self-operated controller (100) according to any of the preceding claims;
**characterized in that**
the valve member (141) and the valve rod (170) are movable along the longitudinal axis between a first position and a second position in order to adjust the throttle point (143).

10. Self-operated controller (100) according to any of the preceding claims;
**characterized in that**
the actuator housing (111) is arranged so as to be rotatable relative to the valve housing (110).

11. Self-operated controller (100) according to claim 10, **characterized in that**
an annular channel (230) is arranged between the actuator housing (111) and the valve housing (110).

12. Self-operated controller (100) according to claim 10 or claim 11, **characterized in that**
the external connection (210) is connected to the annular channel (230) and the first cavity (173) is connected to the annular channel (230).

## Revendications

1. Régulateur sans énergie auxiliaire (100) comportant des lignes de signaux, **comprenant**
un boîtier de soupape (110) et un boîtier d'entraînement (111),
dans lequel le boîtier de soupape (110) comprend une chambre d'entrée (120) et une chambre de sortie (130), et
un siège de soupape (140) disposé dans le boîtier de soupape (110), lequel siège de soupape est disposé entre la chambre d'entrée (120) et la chambre de sortie (130), et un organe de soupape (141) coopérant avec le siège de soupape (140), et un entraînement à membrane (150) disposé dans le boîtier d'entraînement (111), dans lequel l'entraînement à membrane (150) comprend une membrane (153), une première chambre de travail (151) et une seconde chambre de travail (152), dans lequel la première chambre de travail (151) et la seconde chambre de travail (152) sont séparées l'une de l'autre par la membrane (153), dans lequel l'entraînement à membrane (150) est relié à l'organe de soupape (141) par l'intermédiaire d'une tige de soupape (170) et est réalisé pour déplacer l'organe de soupape (141) afin de former un point d'étranglement (142) réglable entre l'organe de soupape (141) et le siège de soupape (140), dans lequel
le boîtier de soupape (110) comprend un élément formant insert (180) à travers lequel la tige de soupape (170) et l'organe de soupape (141) sont guidés le long d'un axe longitudinal (200),
**caractérisé en ce que**
au moins deux lignes de signaux (145, 172) séparées s'étendent à travers la tige de soupape (170) pour le transport de fluide,
dans lequel
la tige de soupape (170) comprend un premier alésage transversal (171), dans lequel le premier alésage transversal (171) est relié à la première chambre de travail (151) de l'entraînement à membrane (150) par l'intermédiaire d'une première ligne de signaux (172) qui s'étend à travers la tige de soupape (170), et
entre l'organe de soupape (141) et l'élément formant insert (180) est réalisé un second espace creux (143) pour décharger l'organe de soupape (141) et la tige de soupape (170) comprend un second alésage transversal (144) qui s'étend transversalement à l'axe longitudinal (200) et qui peut être relié au second espace creux (143), et
la tige de soupape (170) comprend une deuxième ligne de signaux (145) qui est réalisée de sorte que le second espace creux (143) peut être relié à la chambre d'entrée (120) par l'intermédiaire du second alésage transversal (144) qui est relié à la deuxième ligne de signaux (145).

2. Régulateur sans énergie auxiliaire (100) selon la revendication précédente, **caractérisé en ce que**
entre l'élément formant insert (180) et la tige de soupape (170) est réalisé un premier espace creux (173) qui s'étend au moins partiellement sur une paroi extérieure de la tige de soupape (170) et l'élément formant insert (180) et s'étend parallèlement à l'axe longitudinal (200), dans lequel ledit premier espace creux (173) est relié au premier alésage transversal (171).

3. Régulateur sans énergie auxiliaire (100) selon la revendication 2, **caractérisé en ce que**
une longueur du premier espace creux (173) parallèlement à l'axe longitudinal (200) correspond au moins à une longueur de la distance entre une première position et une seconde position le long de l'axe longitudinal (170).

4. Régulateur sans énergie auxiliaire (100) selon l'une des revendications précédentes,
**caractérisé en ce que**
un ressort de consigne (190) est disposé entre l'élément formant insert (180) et la membrane de l'entraînement à membrane (150).

5. Régulateur sans énergie auxiliaire (100) selon l'une des revendications précédentes,
**caractérisé en ce que**
la seconde chambre de travail (152) est reliée à un raccord externe (210) par l'intermédiaire d'une ligne de commande (174).

6. Régulateur sans énergie auxiliaire (100) selon l'une des revendications 2 à 5 précédentes, **caractérisé en ce que**
le raccord externe (210) est relié au premier espace creux (173).

7. Régulateur sans énergie auxiliaire (100) selon l'une des revendications précédentes,
**caractérisé en ce que**
le second espace creux (143) est relié à la seconde chambre de travail (152) par l'intermédiaire d'une troisième ligne de signaux (146) à travers l'élément formant insert (180).

8. Régulateur sans énergie auxiliaire (100) selon la revendication 7, **caractérisé en ce que**
la tige de soupape (170) est reliée à une zone de diaphragme entre la chambre d'entrée (120) et la chambre de sortie (130) par l'intermédiaire de la deuxième ligne de signaux (145), dans lequel l'alésage est relié à la seconde chambre de travail (152) par l'intermédiaire de la troisième ligne de signaux (146) à travers l'élément formant insert (180).

9. Régulateur sans énergie auxiliaire (100) selon l'une des revendications précédentes,
**caractérisé en ce que**
l'organe de soupape (141) et la tige de soupape (170) peuvent être déplacés le long de l'axe longitudinal entre une première position et une seconde position pour régler le point d'étranglement (143).

10. Régulateur sans énergie auxiliaire (100) selon l'une des revendications précédentes,
**caractérisé en ce que**
le boîtier d'entraînement (111) est disposé de manière à pouvoir tourner par rapport au boîtier de soupape (110).

11. Régulateur sans énergie auxiliaire (100) selon la revendication 10, **caractérisé en ce que**
un canal annulaire (230) est disposé entre le boîtier d'entraînement (111) et le boîtier de soupape (110).

12. Régulateur sans énergie auxiliaire (100) selon la revendication 10 ou la revendication 11, **caractérisé en ce que**
le raccord externe (210) est relié au canal annulaire (230) et le premier espace creux (173) est relié au canal annulaire (230).
